# EUROPEAN PATENT APPLICATION

(11) **EP 4 674 811 A1**
(43) Date of publication of application: **07.01.2026**
(21) Application number: 24186159.0
(22) Date of filing: 03.07.2024
(51) Int. Cl.: C01D 5/16, C02F 1/52, C02F 1/20, C02F 11/123, C02F 101/10, C02F 103/16

(54) **METHOD FOR TREATING A SOLUTION CONTAINING SODIUM SULFATE**

(71) Applicant: Umicore Battery Materials Finland Oy, 67900 Kokkola (FI)
(72) Inventor: TUIKKA, Matti, 67900 Kokkola (FI); ERIKSSON, Mårten, 67900 Kokkola (FI); MARJELUND, Janne, 67900 Kokkola (FI)
(74) Representative: Umicore RDI Patent Department

(57) **Abstract**

A method for treating a first aqueous solution containing sodium sulfate obtainable from an industrial process, the method comprising: providing the first aqueous solution; mixing a first agent comprising a source of ammonia with the first aqueous solution, whereby obtaining a first slurry comprising a solid phase and a liquid phase, said solid phase comprising precipitated sodium sulfate and said liquid phase comprising ammonia in dissolved form; and removing the solid phase from the first slurry; wherein the first slurry and/or the liquid phase has an ammonia concentration of at least 100 g/l, as determined by titration at room temperature; and wherein the first agent contains a molar quantity, denoted as X, of potassium, and the first aqueous solution contains a molar quantity, denoted as Y, of sodium, and the molar ratio of potassium to sodium, expressed as X/Y, is less than 0.5, wherein X≥0.

## Description

### TECHNICAL FIELD

Generally, the present invention relates to a method for treating a solution containing sodium sulfate. The method is especially suitable for treating a solution containing sodium sulfate obtained from an industrial process.

### BACKGROUND

Several industrial activities, such as metal refining industry and pulping industry, produce metal sulfates. For example, Kraft pulping wastewaters contain sodium sulfates because of the use of NaOH and Na₂S as cooking chemicals. Another emerging and quickly increasing industrial area is the production of precursors for cathode active material for lithium-ion batteries. The precursors are typically prepared by coprecipitation from sulfate-based metal solutions and alkaline, such as sodium hydroxide (NaOH). After precipitation, a mother liquor left as a waste solution contains high levels of sodium sulfate. Sodium sulfate can also be produced as a byproduct from the hydrometallurgy process of lithium battery recycling, or from the hydrometallurgy process that occurs upstream of the production of precursors.

In general, sulfate emissions into water tend to elevate water salinity levels and can exacerbate eutrophication. Soluble sulfate salts, such as sodium sulfate (Na₂SO₄), contribute to the heightened level of salinity in water. In some industries, wastewater contains soluble sulfate salts. The increased salinity of wastewater evacuating from such an industrial process into water, e.g. a river or a lake, results in greater density compared to the surrounding lake water. As a consequence of these varying densities, water readily stratifies into two distinct layers: a saline bottom layer and a less saline upper layer. This phenomenon is known as stratification, which impedes the natural mixing of water between the bottom and surface layers.

Therefore, in many countries, sulfate concentrations in industrial wastewater are subject to stringent regulations. For instance, in Finland, the allowable levels of sulfate in wastewater and the necessary treatment procedures are established through a company's environmental permit. These sulfate restrictions aim to mitigate the environmental impact stemming from elevated salinity levels in natural waters, particularly in freshwater environments.

Many different approaches have been proposed to limit the discharge of sodium sulfate into the environment. Due to ambitious sustainability goals and rising raw material costs, instead of discharging or landfilling of it, circular ways of processing sodium sulfate are searched. Existing approaches include crystallizing sodium sulfate by evaporation and cooling or converting dissolved sodium sulfate to potassium-based precipitates such as glaserite (K₃Na(SO₄)₂), for example, by introducing potassium hydroxide or potassium chloride. However, these processes are energy-intensive, time-consuming, and requiring complicated process control, and thus not particularly efficient. Further, some residual sodium sulfate in dissolved form may remain with the liquid.

Therefore, there is a need for more efficient and effective methods for processing process streams/solutions containing sodium sulfate.

### SUMMARY OF THE INVENTION

A process has been identified for the treatment of waste solutions/process streams from industrial sources. In particular, it is found that it is possible to enhance the removal of sulfate from an industrial waste process solution containing sodium sulfate by introducing a source of ammonia to precipitate out the sodium sulfate. Thanks to the method according to the invention, the specified ammonia concentration in the solution, as defined in the accompanying claims, reduces the solubility of the sulfate, which allows better crystallization/precipitation of the sulfate. The precipitated sulfate can be conveniently removed, thereby improving the removal of sulfate from the industrial waste solutions/process streams. The present method is straightforward to implement, eliminating the need for substantial energy consumption typically associated with evaporation or cooling processes. Additionally, it avoids the complexity of chemical conversion processes that would otherwise require, for example, the introduction of potassium hydroxide or potassium chloride into the system.

As a first aspect, the present invention provides a method for treating a first aqueous solution containing sodium sulfate obtainable from an industrial process, the method comprising:
- providing the first aqueous solution;
- mixing a first agent comprising a source of ammonia with the first aqueous solution, whereby
- obtaining a first slurry comprising a solid phase and a liquid phase, said solid phase comprising precipitated sodium sulfate and said liquid phase comprising ammonia in dissolved form; and
- removing the solid phase from the first slurry;
wherein the first slurry and/or the liquid phase has an ammonia concentration of at least 100 g/l, as determined by titration at room temperature; and wherein the first agent contains a molar quantity, denoted as X, of potassium, and the first aqueous solution contains a molar quantity, denoted as Y, of sodium, and the molar ratio of potassium to sodium, expressed as X/Y, is less than 0.5, wherein X≥0.

It is found that efficient and effective precipitation of sodium sulfate from the solution containing sodium sulfate is achieved by admixing a source of ammonia with the specified ammonia concentration in the solution. The addition of the source of ammonia in a quantity that results in an ammonia concentration of at least 100 g/l in the first slurry and/or the liquid phase, as determined by room temperature titration, facilitates a high conversion rate of sulfate from the initial solution to the resultant precipitated sulfate.

Without wishing to be bound by any theory, the present inventors have found that the enhancement of crystallization yield is achievable through the strategic modifications, including reduction of the solubility of sodium sulfate in a solution, which may be derived from transition metal sulfate co-precipitation reaction and said solution may be referred to as a precipitation mother liquor. This is accomplished by providing a source of ammonia into the solution in such a quantity that the solution has the specified ammonia concentration, followed by thoroughly mixing until sodium sulfate precipitates. In other words, this process involves salting out the dissolved sodium sulfate by the addition of the source of ammonia. The ammonia alone, under the conditions claimed, functions well as a salting-out agent without the need for additional chemicals that involve complex chemical reactions.

Through conducted experiments, it was observed that the method according to the present disclosure significantly enhances the removal of the sulfate from the solution. This allows for effective control of sulfate concentrations in industrial wastewater, ensuring compliance with stringent regulatory requirements.

The main embodiments are characterized in the independent claims. Various embodiments are disclosed in the dependent claims. The embodiments and examples disclosed herein are mutually freely combinable unless otherwise explicitly stated.

### DETAILED DESCRIPTION OF THE INVENTION

In the following detailed description, preferred embodiments are described in detail to enable practice of the invention. Although the invention is described with reference to these specific preferred embodiments, it will be understood that the invention is not limited to these preferred embodiments. To the contrary, the invention includes numerous alternatives, modifications and equivalents as will become apparent from consideration of the following detailed description and accompanying drawings.

The term "comprising", as used herein and in the claims, should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a composition comprising components A and B" should not be limited to compositions consisting only of components A and B. It means that with respect to the present invention, the only relevant components of the composition are A and B. Accordingly, the terms "comprising" and "including" encompass the more restrictive terms "consisting essentially of" and "consisting of".

In this specification, percentage values, unless specifically indicated otherwise, are based on weight (w/w, by weight, or wt% or wt.%). If any numerical ranges are provided, the ranges include also the upper and lower values.

It should be understood, that in this specification, the term "at least" encompasses the concept of "equal to and/or more than", and the term "at most" encompasses the concept of "equal to and/or less than".

In the present disclosure, solutions are preferably aqueous solutions, when applicable.

As used herein, the term "and/or," when used in a list of two or more items, means that any one of the listed items can be employed by itself, or any combination of two or more of the listed items, can be employed.

In this document, relational terms, such as first and second, top and bottom, and the like, are used solely to distinguish one entity or action from another entity or action, without necessarily requiring or implying any actual such relationship or order between such entities or actions.

It must be noted that, as used in this specification and the appended claims, the singular forms "a," "an," and "the" include plural referents unless the context clearly dictates otherwise.

The terms "ammonia (NH₃) concentration in a solution", "concentration of NH_{3(aq)}" or the like as used herein refers to the quantified amount of ammonia present in an aqueous solution. This concentration is expressed in grams per liter (g/l) and is determined through titration conducted at room temperature, typically around 20°C.

As previously stated, the present disclosure facilitates the removal of sulfate from an industrial waste process solution containing sodium sulfate. It is provided as a method for treating sulfate in an industrial process, or in other words as a method for treating a first aqueous solution containing sodium sulfate obtainable from an industrial process, the method comprising:
- providing the first aqueous solution;
- mixing a first agent comprising a source of ammonia with the first aqueous solution, whereby
- obtaining a first slurry comprising a solid phase and a liquid phase, said solid phase comprising precipitated sodium sulfate and said liquid phase comprising ammonia in dissolved form; and
- removing the solid phase from the first slurry;
wherein the first slurry and/or the liquid phase has an ammonia concentration of at least 100 g/l, as determined by titration at room temperature; and wherein the first agent contains a molar quantity, denoted as X, of potassium, and the first aqueous solution contains a molar quantity, denoted as Y, of sodium, and the molar ratio of potassium to sodium, expressed as X/Y, is less than 0.5, wherein X≥0.

The solid phase and the liquid phase are then separately recovered.

The method for treating sulfate in an industrial process may be implemented as a method for treating a process stream obtainable or directly from an industrial process, wherein the process stream contains sodium sulfate.

The first aqueous solution containing sodium sulfate, as disclosed herein, may be directly obtained from the process streamline, or may undergo pre-treated, such as content and/or condition adjustment.

In the context of the present disclosure, the first aqueous solution containing sodium sulfate, or a process stream containing sodium sulfate, refers to a solution comprising dissolved sodium sulfate, which presents in the form of Na⁺ (sodium ions) and SO₄²⁻ (sulfate ions). The first solution contains sodium sulfate. The first solution may contain wastewater or process stream from an industrial process, said wastewater or process stream containing sodium sulfate. The first solution may be wastewater or process stream from an industrial process. The industrial process may be any applicable industrial process, which provides sodium sulfate (Na₂SO₄) in a suitable form, which may be an effluent, wastewater, waste solution, process stream or the like, of an industrial process.

The industrial process from which the first aqueous solution is obtained may be a precipitation process, for example a process for preparing precursors of cathode active material for secondary batteries, referred as the co-precipitation process. For example, the co-precipitation process may be done by reacting a transition metal aqueous solution with a sodium hydroxide aqueous solution; wherein the transition metal aqueous solution may be prepared by dissolving one or more transition metal raw material such as nickel sulfate, cobalt sulfate, manganese sulfate, etc. in water, and the sodium hydroxide aqueous solution may be prepared by dissolving sodium hydroxide in water. In such a co-precipitation process, the transition metal aqueous solution, the sodium hydroxide aqueous solution, and optionally ammonium ion-containing solution, are introduced into a reactor to proceed with a co-precipitation reaction. Reaction conditions and methods for precipitation or co-precipitation are generally known. The resulting material of the co-precipitation process is a slurry containing a precipitated material comprising metal hydroxide and a solution containing sodium sulfate. Said transition metal may be one or more of nickel (Ni), cobalt (Co), and manganese (Mn). For example, the transition metal aqueous solution may be prepared by dissolving NiSO₄, CoSO₄ and MnSO₄ into deionized water in the required stoichiometric ratios such that a molar ratio of Ni:Mn:Co is x:y:z, for example 0.10 ≤ x ≤ 0.99, 0.00 ≤ y ≤ 0.85, 0.00 ≤ z ≤ 0.40, x+y+z ≤ 1. The sodium hydroxide aqueous solution may have a pH value of 10 or more, 11 or more, or 12 or more. In such a case, the sodium hydroxide solution may act as a pH controlling agent and/or as a precipitant in the co-precipitation. The pH value of the aqueous slurry is the pH value as measured on a sample of the aqueous slurry after cooling to 20°C. Optionally, co-precipitation involves introducing an ammonium ion-containing solution. The ammonium ion-containing solution, as a complexing agent, may include, but not be limited to, NH₄OH, (NH₄)₂SO₄, NH₄NO₃, NH₄Cl, CH₃COONH₄, NH₄CO₃, or a combination thereof. For example, the ammonium ion-containing solution may be an ammonia aqueous solution, also known as ammonia water, ammonium hydroxide, ammoniacal liquor, ammonia liquor, aqua ammonia, or aqueous ammonia, i.e. a solution of ammonia in water. It can be denoted by the symbols NH_{3(aq)}. The resulting material of the co-precipitation process is a slurry containing a precipitated material comprising metal hydroxide and a solution containing sodium sulfate. The precipitated material comprising metal hydroxide may be a precursor of cathode active material for secondary batteries. Thus, the industrial process may be a process of battery industry, for example co-precipitation process of precursors, wherein the resulting precipitated material comprising metal hydroxide may contain,
- Ni in a content x, wherein 10.0 ≤ x ≤ 99.0 mol%,
- Mn in a content y, wherein 0 ≤ y ≤ 85.0 mol%,
- Co in a content z, wherein 0 ≤ z ≤ 40.0 mol%,
- Al in a content q, wherein 0 ≤ q ≤ 10.0 mol%, and
- one or more additional elements in a content r, wherein the additional elements are elements from the list of B, Ba, Ca, Ce, Cr, Fe, La, Mg, Mo, Nb, S, Si, Sr, Ti, Y, V, W, Zn, and Zr, wherein 0 ≤ r ≤ 5.0 mol%,
   and wherein x + y + z + q + r = 100.0 mol%; and
   after removing the precipitates, the remaining solution containing sodium sulfate, also understood as mother liquor, is suitable for being used, directly or after pre-treatment, as the first solution containing sodium sulfate according to the method of the present disclosure. The precipitates and the mother liquor can be separated and recovered by using any suitable methods and devices for separating and recovering solids and liquids, for example by filtering. It is to be understand that other process streams containing sodium sulfate are suitable for being used, directly or after pre-treatment, as the first solution.

In the hydrometallurgical process, sulfuric acid is used to leach metals such as lithium, cobalt, and nickel from the spent batteries or other leachable metal sources. When sulfuric acid reacts with the sodium compounds present in the batteries or other leachable metal sources, it forms sodium sulfate. This production of sodium sulfate is considered a waste byproduct because it does not have a direct role in the recovery of battery metals, and its presence in large quantities can present challenges for the sustainable management of resources. The present method is applicable to treating the process streams obtained from these hydrometallurgical processes. Thus, in some embodiments, the industrial process is a hydrometallurgy process of battery industry, for example a hydrometallurgy process of lithium battery recycling or a hydrometallurgy process being upstream of the production of precursors; or wherein the first aqueous solution is obtainable from a hydrometallurgy process of battery industry, for example a hydrometallurgy process of lithium battery recycling or a hydrometallurgy process being upstream of the production of precursors.

According to the present disclosure, the first aqueous solution containing sodium sulfate is mixed with a first agent comprising a source of ammonia, so that the first slurry and/or the liquid phase has an ammonia concentration of at least 100 g/l and a precipitation/salting-out process initiates, thereby obtaining a first slurry comprising a solid phase and a liquid phase, said solid phase comprising precipitated sodium sulfate and said liquid phase comprising ammonia in dissolved form. It is observed that a surprising significant improvement in conversion rate of sulfate from the first aqueous solution to the resultant precipitated sulfate is achieved when the concentration of ammonia in the first slurry and/or the liquid phase is at least 100 g/l, which contributes to a conversion rate of above 75%, which means that a significant amount of sulfate in the first aqueous solution can be removed, as well as a high yield of precipitated sulfate, preferably precipitated sodium sulfate. Advantageously, the concentration of ammonia in the first slurry and/or the liquid phase is 110 g/L or more, such as at least 120, 130, 140, 145, 150, 155, 160, 170, 180, 190, 200, 230, 240, 250, 260, 270 or 280 g/L. It is observed, that the higher the concentration of ammonia in the first slurry and/or the liquid phase, the better the conversion rate of sulfate. There is no particular upper limit of the concentration of ammonia in the first slurry and/or the liquid phase, above which the conversion rate would be deteriorated. On the other hand, it is observed that that the concentration as high as 250 - 400 g/l would contribute the conversion rate to above 85-95%, depending on the source of the first aqueous solution. Thus, the preferable range is within 250 - 400 g/l, such as 270 - 350 g/l. In some industrial applications, it is sufficient to reduce the concentrations of sulfate to the extent that the legal regulation allows. Thus, the present disclosure provides flexible ways for enabling the degree of sulfate removal in an industry.

In some embodiments, it is advantageous to use anhydrous ammonia in the method, as it is easier to tailor the ammonia concentration on-site especially when a higher concentration is desired. There are various ways to obtain ammonia gas, for example by heating a solution containing dissolved ammonia, or by reacting ammonium salts with strong alkali such NaOH or KOH. Commercially available anhydrous ammonia is typically stored under high pressure in liquid form within specialized containers; upon release into the atmosphere, it swiftly transitions into a gaseous state. Both liquid ammonia and gaseous ammonia dissolve readily in water. It is advantageous to admixing anhydrous ammonia directly with the first aqueous solution to facilitate the water management. Various ways of mixing anhydrous ammonia, either in liquid form or in gaseous form, and a solution, may be implemented and may be chosen according to the applications. As gaseous ammonia is around 40 percent lighter than air, anhydrous ammonia may be supplied to be in contact with the first aqueous solution, for example, through an inlet that opens below the solution level, or through a porous diffuser into the solution from the bottom. In addition or alternatively, the first aqueous solution and the anhydrous ammonia may be supplied into a sealable reaction vessel to avoid escape of gas, and the sealable vessel also ensures controlled conditions and containment during the reaction, for example conducting the method at inert atmosphere when it is desirable. These make use of anhydrous ammonia even more efficiently and effectively. Mechanical agitation, for example by using a stirrer, impeller, or magnetic stir bar to create turbulence in the solution, may be used. Thus, in some embodiments, in the method according to the present disclosure, the admixing the anhydrous ammonia and the first aqueous solution comprises steps of: a) providing the first aqueous solution containing sodium sulfate into a sealable reaction vessel; b) supplying anhydrous ammonia into the reaction vessel; and c) mixing the first aqueous solution and the anhydrous ammonia at a pressure equal to or exceeding atmospheric pressure inside the reaction vessel. The reaction vessel may be configured to adjust pressure inside the reaction vessel, so that the mixing the first aqueous solution and the anhydrous ammonia at a pressure equal to or exceeding atmospheric pressure inside the reaction vessel. Also, it is advantageous to conduct the method in a sealable reaction vessel configurable to adjust pressure inside the reaction vessel, such that the mixing may be conducted at a pressure equal to or exceeding 1.013 bar, preferably in a range of 1.05 to 4.5 bar, for example equal to or more than 1.10, 1.20, 1.30, 1.40, or 1.50 bar, and/or up to 1.9, 2.0, 3.0, or 4.0 bar. The gas dissolves in water better under pressure. When the pressure of a gas above a liquid level increases, the solubility of the gas in the liquid also increases. The process according to the present disclosure can be carried out in any means suitable, for example in an autoclave reactor. Based on the knowledge of the kinetics of the reaction, the skilled person would use suitable reactor types.

The solid phase comprising crystallized sodium sulfate can be commercially used in various applications, such as in the detergents, paper industry, textile industry, and so on. As appreciated by the skilled person the ammonia concentration in a solution (NH_{3(aq)} concentration) can be measured by using a commercially available titrator, for example Metrohm 848 Titrino Plus.

The present disclosure provides a simple process for salting out the sodium sulfate and can be easily applied in the industrial scale, without the need for additional agents, for example potassium hydroxide or potassium chloride, to convert the sodium sulfate to potassium-based precipitates e.g. glaserite (K₃Na(SO₄)₂), which was proposed by previous approaches in the art. In the reactions that convert dissolved sodium sulfate into potassium-based precipitates, the molar ratio of potassium to sodium is at least 0.75. Thus, it can be reasonably justified that, in the process according to the present disclosure, the molar ratio of potassium, existing in the process system, if any, to sodium existing in the system, is less than 0.75. As a result, the solid phase contains little amount of potassium-based precipitate. On the other hand, as the first aqueous solution may inherently contain a traceable amount of potassium ion, depending on source of the industrial process streams, the solid phase may contain certain amount of potassium-based precipitate, such as potassium sulfate. Thus, it can be reasonably justified that, in the process according to the present disclosure, the molar ratio of potassium, existing in the first agent, if any, to the molar ratio sodium existing in the system, is less than 0.5. Accordingly, in the present disclosure, the first agent contains a molar quantity, denoted as X, of potassium, and the first aqueous solution contains a molar quantity, denoted as Y, of sodium, and the molar ratio of potassium to sodium, expressed as X/Y, is less than 0.5, wherein X≥0. For the same reason stated above, according to the present disclosed method, the solid phase has a potassium content of at most 25 wt. %, more preferably at most 20 wt. %, for example at most 10, 5, 1, 0.5 or 0.2 wt. %, as determined by ICP.

In some embodiments, the present method can be implemented as follows:
A method for treating a first aqueous solution containing sodium sulfate obtainable from an industrial process, the method comprising:
- providing the first aqueous solution;
- mixing a first agent comprising a source of ammonia with the first aqueous solution, wherein the first agent is substantially deprived of potassium, whereby
- obtaining a first slurry comprising a solid phase and a liquid phase, said solid phase comprising precipitated sodium sulfate and said liquid phase comprising ammonia in dissolved form; and
- removing the solid phase from the first slurry;
wherein the first slurry and/or the liquid phase has an ammonia concentration of at least 100 g/l, as determined by titration at room temperature.

In some embodiments, the first agent consists of the source of ammonia.

To further optimize the utilization of ammonia, it is preferable to conduct the method at a temperature in favor of solubility of NH₃. In addition, lower temperatures also facilitate the decreased solubility of sodium hydroxide. Thus, in an embodiment, the admixing is conducted at a temperature in a range of 2-30 °C, such as 2-25 ^{O}C. On the other hand, active cooling to a temperature under 15 ^{O}C may not be needed, so as to avoid extra energy consumption. Therefore, preferably the temperature is in a range of 15-22 ^{O}C. The temperature may be maintained at the interval of said disclosed ranges throughout the mixing.

According to the present method, the precipitation/salting-out process may be further improved, in terms of efficiency, by adjusting the concentration of the elements in the first aqueous solution comprising sodium sulfate before the mixing step. For example, by concentrating, preferably by evaporating, the concentration of elements in the first aqueous solution may be increased. Advantageously, a concentration of the sulfur in the first aqueous solution is 10.00 g/L or more, such as in the range of 10.00-30.00 g/L, or 15.00 g/L or more, such as in the range of 15.00-50.00 g/L, as determined by ICP; and/or wherein a concentration of the sodium in the first aqueous solution is 15.00 g/L or more, such as in the range of 15.00-80.00 g/L, or 30.00 g/L or more, such as in the range of 30.00-90.00 g/L, as determined by ICP.

According to the present method, when the relatively pure precipitated sodium sulfate is desired, it is advantageous that the concentration of other elements than sulfur and sodium in the first aqueous solution is low, for example at most 5.00 g/l, preferably at most 2 g/l, and more preferably at most 1 g/l, and most preferably at most 0.5 g/l, as determined by ICP. Ways of selective extraction of an element from a solution are generally known in the art. For example, prior to the mixing step, a process stream containing other elements, such as magnesium ion (Mg²⁺), may be pre-treated with an alkali hydroxide, e.g. sodium hydroxide, to precipitate out magnesium hydroxide which can be easily filtered away from the solution; in such case, it is preferably that the process stream is alkaline or made alkaline, to facilitate the precipitation. The separated and recovered fractions may be analyzed for purity with any suitable means. For example, the purity of the sodium sulfate may be analyzed from a sample by using X-ray Powder Diffraction (XRD) and related instrumentation, such as an X-ray powder diffractometer or versatile XRD systems for R&D, to obtain XRD spectra or pattern. This obtained data can be used for evaluating the purity of the sodium sulfate and/or obtaining a mass fraction of the sulfates in the sample to evaluate the conversion degree in the method, success of the method and the like. The proceeding of the reaction, such as the conversion degree during the reaction, may be also monitored and/or estimated by using other means, such as monitoring absorbance and/or turbidity of the reaction mixture, detecting formed precipitate and the like.

As previously mentioned, the industrial process may be a process of battery industry wherein a co-precipitation process is done by reacting an aqueous solution comprising transition metal sulfate and an alkaline solution comprising sodium hydroxide, thereby obtaining a slurry comprising a mother liquor and precipitated material being a particulate hydroxide and/or oxyhydroxide of the transition metal; said transition metal comprising at least one of Ni, Mn, and Co. Said mother liquor generally has a relatively higher concentration of sulfur and sodium, such as in the ranges as defined in the claims, and a relatively lower concentration of other elements than sulfur and sodium, such as in the ranges as defined in the claims. Therefore, it is advantageous to implement the present method wherein the industrial process is a process of battery industry, and/or wherein the first aqueous solution is obtained from a mother liquor, which may be referred as alkaline waste sulfate solution, of said co-precipitation process.

Likewise, the industrial process may be a process of the battery industry wherein a leaching process is performed by treating a spent battery material or other leachable metal source with an acidic solution, thereby obtaining a leachate comprising a process stream and leached material. Said process stream may generally have a relatively higher concentration of sulfur and sodium, such as in the ranges as defined in the claims, and a relatively lower concentration of other elements than sulfur and sodium, such as in the ranges as defined in the claims. Therefore, it is advantageous to implement the present method wherein the industrial process is a process of the battery industry, and/or wherein the first aqueous solution is obtained from a leaching process stream, which may be referred to as acidic waste sulfate solution, of said leaching process. In some embodiments, the first solution has a pH of at least 5. On the other hand, if it is desirable that some other impurities existing in the process stream are removed prior to salting out the sodium sulfate, the first aqueous solution may be made alkaline before the mixing step, to facilitate the precipitation of the impurities as hydroxide or oxide, for example. Thus, in some embodiments, the method comprises increasing alkalinity of the reaction mixture, such as by providing sodium hydroxide, which at the same time works as a precipitant.

The first aqueous solution may be inherently alkaline. The first aqueous solution may be or may comprise a sodium sulfate solution being formed as a by-product in battery material industry, for example where alkali, e.g. NaOH, is used in the industrial process and renders the first aqueous solution alkaline. By being alkaline it is meant the pH of the solution is at an alkaline range, such as pH of 9 or more, 10 or more, 11 or more, or 12 or more, as determined at 20°C. Thus, the method according to the present disclosure is suitable for treating a first aqueous solution containing sodium sulfate obtained from an industrial process, wherein the first aqueous solution is alkaline or acidic.

According to the present disclosure, the obtained first slurry comprises a solid phase and a liquid phase, said solid phase comprising precipitated sodium sulfate and said liquid phase comprising ammonia in dissolved form. The solid phase and the liquid phase can be separated and recovered by using any suitable methods and devices for separating and recovering solids and liquids, for example by filtering. Thus, removing the solid phase from the first slurry may be done by filtering the first slurry.

The filtering process and equipment are generally known in the field. An example is provided below. Slurries are filtrated in a dewatering process to separate the solid particles from the liquid. The dewatering process may be realized by a belt filter having a moving endless filter cloth having a feed end onto which the slurry is distributed. The liquid of the slurry filtrates through the filter cloth permeable to the liquid, whereby a filter cake containing solid particles of the slurry is formed onto the filter cloth. The filter cake can then be washed in a washing phase by passing washing liquid through the filter cake, while the cake is resting on the moving filter cloth. The filtration of the liquids through the filter cloth is often enhanced by creating a partial vacuum on another side of the filter cloth than onto which the filter cake is formed. At the discharge end of the belt filter the filter cake is removed from the filter cloth and possibly conveyed to further processing phases outside the belt filter such as to an additional drying phase.

The purity of the precipitated sodium sulfate may be increased by a washing procedure to remove surface impurities or impurities attached inside the crystal. Accordingly, in some embodiments of the present disclosure, the method further comprises recovering the solid phase and washing the recovered solid phase with a washing liquid, wherein said washing liquid does not dissolve or react with sodium sulfate. In addition or alternatively, the purity of the precipitated sodium sulfate may be increased by a recrystallization procedure. An example of such recrystallization procedure may be: dissolving the compound in an appropriate hot solvent; allowing the solution to cool and allowing the compound to crystallize out; isolating the crystals by filtration; washing the surface of the crystals with cold solvent to remove residual impurities; drying the crystals.

According to the present disclosure, the method further comprises separating ammonia from the liquid phase, preferably by ammonia stripping. Ammonia stripping is generally well known to separate the gaseous NH₃ from the liquid phase. Subsequently, anhydrous ammonia can be obtained and reused in the method for treating sulfate or upstream the method for treating sulfate, for example to make an ammonia aqueous solution to be used as a complexing agent in the co-precipitation of precursors.

According to the present disclosure, the method further comprises reusing a fraction of the liquid phase upstream the method for treating sulfate, for example to make an ammonia aqueous solution to be used as a complexing agent in the co-precipitation of precursors, wherein the fraction of the liquid phase may be diluted to a suitable concentration for serving as the complexing agent.

The method may comprise providing, such as conveying and/or transporting, waste sodium sulfate from the industrial process, or a process step generating sodium sulfate waste, for example to the container. The first solution may contain small amounts of impurities, but it was found out in the tests that the impurities did not interfere the process and they could be even separated from the sodium sulfate, if necessary.

### Examples

The present invention is further illustrated with reference to some examples and comparative examples.

### Measurement methods used in the examples

### NH_{3(aq)} concentration analysis

The NH_{3(aq)} concentration was measured from a sample by end point titration using an instrument of Metrohm 848 Titrino Plus. 1 ml of a solution containing the NH₃ content to be measured was added to a titration vessel, followed by adding of 30-40 ml of deionized water and 1 ml of 1M NaOH. The obtained sample was the titrated to the end point by 0.1M HCl.

### X-ray diffraction analysis

The XRD spectra of the samples were measured with an X-ray diffractometer EMPYREAN^{®} by a manufacturer of PANalytical with the conditions as described in Table 1 below.

**Table 1 XRD measurement conditions**

| | |
|---|---|
| Anode material | Co |
| K-Alpha 1 wavelength | 1.78901 Å |
| Generator voltage | 40 kV |
| Tube current | 45 mA |
| Scan Range | 10-90 ° |
| Scan Step Size | 0.0130 ° |
| Scan step time | 178.24 s |
| Divergence slit | 0.355 ° |
| detector opening | 3.3482 ° |
| primary soller slit | 0.04 |

### Elemental composition analysis

The contents of K, Na and S in the obtained solid fraction and liquid fraction samples were measured by the Inductively Coupled Plasma - Optical Emission Spectrometry (ICP-OES) method using an Thermo iCAP 6000 Series ICP-OES instrument.

The measurement sample was prepared as follows for solid samples: 0.25 gram of a powder sample of each example was dissolved into deionized (DI) water in a 100 ml volumetric flask. The volumetric flask was filled with deionized (DI) water up to the 100 ml mark, followed by complete homogenization. 1 ml of the solution was taken out by a pipette and transferred into a 100 ml volumetric flask for the second dilution. An appropriate amount of a concentrated nitric acid was added by a pipette to achieve 5% HNO₃ solution when brought to volume with deionized water (DI) and then homogenized. Finally, this solution was used for the ICP-OES measurement. The contents of K, Na and S are expressed as %.

The measurement sample was prepared as follows for liquid samples: 1 ml of liquid sample was taken out by a pipette and transferred into a 100 ml volumetric flask. The volumetric flask was filled with deionized (DI) water up to the 100 ml mark, followed by complete homogenization. An appropriate amount of the solution was taken out by a pipette and transferred into a 100 ml or 250 ml volumetric flask for the second dilution. An appropriate amount of a concentrated nitric acid was added by a pipette to achieve 5% HNO₃ solution when brought to volume with deionized water (DI) and then homogenized. Finally, the solution was used for the ICP-OES measurement. The contents of Co, Mn, Co, K, Na, and S are expressed as g/l.

### Preparation example 1a

First, a transition metal aqueous solution was prepared by dissolving NiSO₄, CoSO₄ and MnSO₄ into deionized water in the required stoichiometric ratios such that a molar ratio of Ni:Mn:Co in the 120 g/L resulting solution was 0.90:0.04:0.06. Then precipitation of a transition metal hydroxide was conducted by continuously feeding the transition metal aqueous solution, 220 g/L ammonia water and 220g/L sodium hydroxide aqueous solution to a reaction vessel equipped with baffles, a six-bladed turbine and a concentrator through which mother liquor can be withdrawn from the reaction vessel, and mixing such that the NH₃ concentration of the reaction mixture, i.e. aqueous slurry, was 6-7 g/L and the pH was 11.8±0.1, respectively. The pH value of the aqueous slurry is the pH value as measured on a sample of the aqueous slurry after cooling to 20°C. The precipitation was ended when an average particle diameter (D50) of the transition metal hydroxide reached approximately the target value of 10.0 µm. Throughout the precipitation, the mixing was done by rotating and the temperature of the slurry was kept at 75 °C inside the reaction vessel by heating and respectively an inert atmosphere was ensured by circulating nitrogen gas through the vessel. Thus, the transition metal hydroxide was obtained, and mother liquor was recovered from the slurry by filtering.

The recovered mother liquor was analyzed by the ICP-OES analysis method as described above; the results are reported in Table 2.

**Table 2. The content of the mother liquor (i.e. alkaline waste sulfate solution from the Preparation example 1) used in Examples 1.1-1.3 and Comparative examples 1a.1-1a.3**

| Mother liquor | Co (g/L) | Mn (g/L) | Ni (g/L) | K (g/L) | Na (g/L) | S (g/L) |
|---|---|---|---|---|---|---|
| Preparation example 1a | 0 | 0 | 0.0056 | 0.5301 | 41.52 | 31.62 |

### Preparation example 1b

A similar preparation process as described in Preparation example 1a was done. The analytical data of the recovered mother liquor are shown in Table 3 below.

**Table 3. The content of the mother liquor (i.e. alkaline waste sulfate solution from the Preparation example 1b) used in Comparative examples 1b**

| Mother liquor | Co (g/L) | Mn (g/L) | Ni (g/L) | K (g/L) | Na (g/L) | S (g/L) |
|---|---|---|---|---|---|---|
| Preparation example 1b | 0 | 0 | 0.0096 | 0.7920 | 38.65 | 28.68 |

### Preparation example 2

A sample of a process stream was obtained from an industrial leaching plant, wherein the production process generally involves refining to obtain solutions of the necessary metals that will later make up the precursors: nickel, cobalt and manganese, in the form of sulfates. The process may be carried out by different routes: dissolution of metal sources, leaching of metals or refining of leachable mixed metal sources with the help of specific reagents, or other hydrometallurgical processes. The sample was analyzed by the ICP-OES analysis method as described above; the results are reported in Table 4. The sample had a pH of 5.38, as determined at 20°C.

**Table 4. The content of the industrial process stream (i.e. waste sulfate solution from the Preparation example 2) used in Examples 3.1-3.5**

| Mother liquor | Co (g/L) | Mn (g/L) | Ni (g/L) | Mg (g/L) | Na (g/L) | S (g/L) |
|---|---|---|---|---|---|---|
| Preparation example 2 | 0.0599 | 0.00147 | 0.6014 | 1.8 | 16.95 | 15.29 |

### Example 1

Three separate experiments, Ex 1.1-1.3, were conducted. In each experiment, 200 mL of the mother liquor of the Preparation example 1 was added to a 400ml Erlenmeyer flask. In Ex 1.3, 1.6 g of NaOH was added to the Erlenmeyer flask and stirred to get a homogenous solution. A gas tube connected to a source of gaseous ammonia was brought below the liquid surface in the Erlenmeyer. The supply of gaseous ammonia was initiated. The gas was then directed into an Erlenmeyer flask through a slightly loosened rubber cap, which allowed for the safe release of any excess pressure. The process continued for around 2 hours, and a sample was extracted from the flask for the purpose of titrating the ammonia. Different temperature conditions were applied to Ex 1.1 - 1.3, and the measured temperatures are recorded in Table 5. The solution in the Erlenmeyer flask was promptly filtered. Both the filtrate and precipitate were then analyzed using the methods as mentioned above, which included Inductively Coupled Plasma (ICP) for elements such as Sodium (Na), Potassium (K), Sulfur (S), Nickel (Ni), Manganese (Mn), and Cobalt (Co), as well as X-Ray Diffraction (XRD). The analytical results are shown in Table 6.

### Comparative Example 1a

Three separate experiments, CEx 1a.1-1a.3, were conducted. In each experiment, 200 mL of the mother liquor of the Preparation example 1 was added to a 400 ml Erlenmeyer flask. Different temperature conditions were applied to CEx 1a.1 - 1a.3, and the measured temperatures are recorded in Table 5. The solution in the Erlenmeyer flask was promptly filtered. Both the filtrate and precipitate were then analyzed using the same methods as mentioned above. The analytical results are shown in Table 6.

### Comparative Example 1b

Examples 1b was conducted by mixing 15 g of potassium hydroxide (KOH) pellets in 200 mL of the mother liquor of the Preparation example 1b in a 400ml Erlenmeyer flask while continuously stirring by a magnetic stirrer in an Erlenmeyer flask to form a fully homogenous solution. The molar ratio of potassium to sodium in the homogenous solution was around 1.2. The solution was cooled down to 15 °C, followed by Büchner funnel filtering to separate the obtained solid and liquid fractions. Both the filtrate and precipitate were then analyzed using the same methods as mentioned above. The analytical results are shown in Table 6.

**Table 5. The conditions used in Examples 1.1-1.3 and Comparative Examples 1a.1-1a.3**

| Example | Amount of added waste sodium sulfate solution (ml) | Amount of added NaOH (g) | Supply of NH₃ gas (hour) | Temperature measured before filtering (°C) |
|---|---|---|---|---|
| Ex 1.1 | 200 | - | 2 | 7.5 |
| Ex 1.2 | 200 | - | 2 | 5.1 |
| Ex 1.3 | 200 | 1.6 | 2 | 4.2 |
| CEx 1a.1 | 200 | - | - | 9.7 |
| CEx 1a.2 | 200 | - | - | 5.4 |
| CEx 1a.3 | 200 | - | - | 2.8 |

**Table 6. The analytical results of the obtained solid and liquid fractions of Examples 1.1 -1.3 and Comparative example 1a.1-1a.3 and 1b**

| Exampl e | NH₃ con cent rati on in solu tion (g/l) | Conve rsion of SO₄ (%) | XRD analysis, main phase | ICP analysis (filtrate) | | ICP analysis (solid) | | |
|---|---|---|---|---|---|---|---|---|
| | | | | Na (g/L) | S (g/L) | K (wt. %) | Na (wt. %) | S (wt. %) |
| Ex 1.1 | 137 | 77.5 | Na₂SO₄ | 7.10 | 7.13 | 0.96 | 30.68 | 21.60 |
| Ex 1.2 | 112 | 85.2 | Na₂SO₄ | 6.95 | 4.69 | n/a | n/a | n/a |
| Ex 1.3 | 124 | 90.9 | Na₂SO₄ | 8.22 | 2.89 | 0.15 | 29.53 | 20.77 |
| CEx 1a.1 | - | 42.0 | Na₂SO₄ | 25.49 | 18.25 | 0.002 | 32.43 | 21.57 |
| CEx 1a.2 | - | 66.0 | Na₂SO₄ | 15.43 | 10.83 | 0.003 | 28.47 | 19.30 |
| CEx 1a.3 | - | 63.0 | Na₂SO₄ | 16.54 | 11.73 | 0.004 | 27.17 | 18.49 |
| CEx 1b | - | 19.0 | K₃Na (SO₄)₂ | 37.79 | 23.3 | 27.19 | 5.639 | 15.62 |

Referring to Table 5, the removal of sulfate from the alkaline waste sulfate solution was improved in every Examples 1.1-1.3 compared to the sulfate removal of the Comparative example 1a.1-1a.3 and 1b.

### Example 2

Three separate experiments, Examples 2.1-2.3, were conducted in a reactor autoclave equipped with a cooling system, a controlling unit, and a gas-entrainment impeller. In each experiment, 150 mL of the mother liquor of the Preparation example 1 was added into the autoclave. Then, the autoclave was closed and placed in its holder. Temperature and pressure sensor wires, a gas hose linked to an ammonia gas source, and cooling hoses linked to a cooling system, and a mixer were attached to the autoclave. The cooling system was turned on. The mixer was switched on, and the rotation frequency was set to 500 rpm. An autoclave control unit was switched on for monitoring the readings given by the temperature and pressure sensors and for adjusting the temperature and the pressure.

Ammonia gas was fed into the autoclave, firstly expelling the air from the autoclave, and then continuing feeding until the pressure in the autoclave reached the target value. The autoclave pressure was maintained, and the autoclave was cooled to the desired temperature. The mixing was continued for 30 minutes, and then the experiment was terminated.

The recorded pressure and temperature of each example are shown in Table 7.

After terminating the reaction, the solution, a slurry comprising a solid phase and a liquid phase, inside the autoclave was transferred to suction filtration.

The similar analysis of the obtained solid and liquid fractions as mentioned above was conducted and the results are given in Table 8.

### Example 3

Five separate experiments, Examples 3.1-3.5, were conducted in the same way as described in Example 2, except the starting solution was obtained from Preparation example 2. In Ex 3.4 -3.4, the starting solution was pre-treated with 1.3 g NaOH to precipitate out metal hydroxide as impurities, in this case Mg(OH)₂, which were filtered away

The recorded pressure and temperature of each example are shown in Table 7.

After terminating the reaction, the solution, a slurry comprising a solid phase and a liquid phase, inside the autoclave was transferred to suction filtration.

The similar analysis of the obtained solid and liquid fractions as mentioned above was conducted and the results are given in Table 8.

**Table 7. The recorded values of pressure and temperature in Examples 2 and 3**

| Example | Measured pressure (bar) | measured temperature (°C) |
|---|---|---|
| Ex 2.1 | 0.9 | 20.0 |
| Ex 2.2 | 1.9 | 21.7 |
| Ex 2.3 | 4.0 | 20.1 |
| Ex 3.1 | 0.8 | 20.1 |
| Ex 3.2 | 1.8 | 20.1 |
| Ex 3.3 | 3.8 | 19.6 |
| Ex 3.4 | 1.8 | 20.0 |
| Ex 3.5 | 3.8 | 20.3 |

**Table 8. The analysis results of the obtained solid and liquid fractions of Examples 2 and 3**

| Exam ple | NH₃ conce ntratio n in solutio n (g/l) | Conve rsion of SO₄ (%) | XRD analysis, main phase | ICP analysis (filtrate) | | ICP analysis (solid) | | |
|---|---|---|---|---|---|---|---|---|
| | | | | Na (g/L) | S (g/L) | K (wt. %) | Na (wt. %) | S (wt. %) |
| Ex 2.1 | 294 | 98.0 | Na₂SO₄ | 1.04 | 0.63 | 0.23 | 33.79 | 22.41 |
| Ex 2.2 | 171 | 97.1 | Na₂SO₄ | 1.51 | 0.93 | 0.16 | 31.97 | 21.22 |
| Ex 2.3 | 337 | 98.7 | Na₂SO₄ | 0.65 | 0.43 | 0.05 | 32.45 | 20.85 |
| Ex 3.1 | 301 | 75.5 | Na₂SO₄ | 3.53 | 3.75 | 0.01 | 28.41 | 19.01 |
| Ex 3.2 | 305 | 86.0 | Na₂SO₄ | 1.66 | 2.14 | 0.05 | 28.12 | 18.87 |
| Ex 3.3 | 235 | 87.1 | Na₂SO₄ | 1.28 | 1.97 | 0.06 | 26.35 | 18.14 |
| Ex 3.4 | 280 | 89.8 | Na₂SO₄ | 2.49 | 1.56 | 0.04 | 27.72 | 18.44 |
| Ex 3.5 | 291 | 96.6 | Na₂SO₄ | 1.41 | 0.52 | 0.01 | 28.09 | 18.15 |

According to Table 8, Examples 2 and 3, using different starting solutions and conditions which are within the scope of the present disclosure, all resulted in a conversion rate of above 75 %.

## Claims

1. A method for treating a first aqueous solution containing sodium sulfate obtainable from an industrial process, the method comprising:
- providing the first aqueous solution;
- mixing a first agent comprising a source of ammonia with the first aqueous solution, whereby
- obtaining a first slurry comprising a solid phase and a liquid phase, said solid phase comprising precipitated sodium sulfate and said liquid phase comprising ammonia in dissolved form; and
- removing the solid phase from the first slurry;
wherein the first slurry and/or the liquid phase has an ammonia concentration of at least 100 g/l, as determined by titration at room temperature; wherein the first agent contains a molar quantity, denoted as X, of potassium, and the first aqueous solution contains a molar quantity, denoted as Y, of sodium, and the molar ratio of potassium to sodium, expressed as X/Y, is less than 0.5, wherein X≥0.

2. The method according to claim 1, wherein the ammonia concentration in the first slurry and/or the liquid phase is at least 110 g/l, for example at least 120, 130, or 140 g/l; preferably at least 145 g/l, for example at least 150, or 155 g/l; more preferably at least 160 g/l, for example at least 170, or 180 g/l; and even more preferably at least 200 g/l, for example at least 230, 250, 270 or 280 g/l.

3. The method according to any of preceding claims, wherein the ammonia concentration in the first slurry and/or the liquid phase is at most 400 g/l, for example at most 350 g/l, or at most 340 g/l.

4. The method according to any of preceding claims, wherein the mixing is conducted at a temperature not exceeding 50 ^{o}C, for example in the interval of 0 °C to 50 ^{o}C; preferably the temperature is in a range of 2-30 ^{o}C, such as 2-25 ^{o}C; more preferably, the temperature is in a range of 15-22 ^{o}C.

5. The method according to any of preceding claims, wherein the mixing is conducted at inert atmosphere.

6. The method according to any of preceding claims, wherein the solid phase has a potassium content of at most 25 wt. %, more preferably at most 20 wt. %, as determined by ICP.

7. The method according to any of the preceding claims, wherein a concentration of sulfur in the first aqueous solution is 10.00 g/l or more, such as in the range of 10.00-30.00 g/l, or 15.00 g/l or more, such as in the range of 15.00-50.00 g/l, as determined by ICP; and/or wherein a concentration of sodium in the first aqueous solution is 15.00 g/l or more, such as in the range of 15.00-80.00 g/l, or 30.00 g/l or more, such as in the range of 30.00-90.00 g/l, as determined by ICP.

8. The method according to any of the preceding claims, wherein a concentration of at least an element other than sulfur and sodium, preferably all other elements than sulfur and sodium, in the first aqueous solution is at most 5.00 g/l, preferably at most 2 g/l, and more preferably at most 1 g/l, and most preferably at most 0.7 g/l, as determined by ICP.

9. The method according to any the preceding claims, further comprising recovering the solid phase; preferably further comprising washing the solid phase with a washing liquid.

10. The method according to any of the preceding claims, further comprising separating ammonia from the liquid phase, for example by ammonia stripping, and preferably ammonia is obtained and reused in the method for treating the first aqueous solution or upstream the method for treating the first aqueous solution.

11. The method according to any of the preceding claims, wherein the first aqueous solution is alkaline, preferably having a pH value of pH 9 or more, pH 10 or more, pH 11 or more, or pH 12 or more, as determined at 20°C.

12. The method according to any of preceding claims, further comprising reusing a fraction of the liquid phase upstream the method for treating sulfate.

13. The method according to any of the preceding claims, wherein the industrial process is a process of battery industry, preferably wherein the first aqueous solution is obtained from a mother liquor of a co-precipitation process, wherein said co-precipitation process is done by reacting an aqueous solution comprising transition metal sulfate and an alkaline solution comprising sodium hydroxide, thereby obtaining a slurry comprising the mother liquor and precipitated material being a particulate hydroxide and/or oxyhydroxide of the transition metal; said transition metal comprising at least one of Ni, Mn, and Co.

14. The method according to any of the preceding claims, wherein the industrial process is a hydrometallurgy process of battery industry, for example a hydrometallurgy process of lithium battery recycling or a hydrometallurgy process being upstream of the production of precursors; or wherein the first aqueous solution is obtainable from a hydrometallurgy process of battery industry, for example a hydrometallurgy process of lithium battery recycling or a hydrometallurgy process being upstream of the production of precursors.

15. The method according to any of the preceding claims, wherein the source of ammonia is anhydrous ammonia, and wherein the source of ammonia and the first aqueous solution are provided into a sealable reaction vessel configurable to adjust pressure inside the reaction vessel, and mixing the source of ammonia with the first aqueous solution is conducted at a pressure equal to or exceeding atmospheric pressure inside the reaction vessel, preferably the pressure is equal to or exceeding 1.013 bar, preferably in a range of 1.05 to 4.5 bar, for example equal to or more than 1.10, 1.20, 1.30, 1.40, or 1.50 bar, and/or up to 1.9, 2.0, 3.0, or 4.0 bar.
